# EUROPEAN PATENT SPECIFICATION

(11) **EP 1 512 954 B1**
(45) Date of publication and mention of the grant of the patent: **31.08.2005**
(21) Application number: 03020102.4
(22) Date of filing: 04.09.2003
(51) Int. Cl.: G01M 1/32, G01M 1/36, G01M 1/22

(54) **Method of matching a vehicle wheel**
Verfahren zur Abstimmung eines Fahrzeugrades
Procédé de mise en correspondance d'une roue d'un véhicule

(43) Date of publication of application: 09.03.2005
(73) Proprietor: Snap-on Equipment Srl a unico socio., 42015 Correggio (Reggio Emilia) (IT)
(72) Inventor: Braghiroli, Francesco, 42100 Reggio Emilia (IT)
(74) Representative: Nöth, Heinz

(56) References cited:
- WO-A-90/03561
- US-A- 5 827 964
- US-B1- 6 397 675

## Description

The invention concerns a method of matching a vehicle wheel having a pneumatic tyre mounted on a rim, in which the tyre and the rim are rotated relative to each other in dependence on non-uniformities.

A method of that kind is known from 'Werkstatt und Betrieb' 1970, pages 183 - 188 and the document US-A-6397675. The known method invoives ascertaining a highest point in terms of the runout of the tyre and a lowest point in terms of the runout of the rim, or vice-versa. By rotating the tyre with respect to the rim (matching), those non-uniformities at the vehicle wheel are minimised or cancelled relative to each other, for example by the highest point in respect of the runout of the tyre being moved to a position at the lowest point in respect of the runout of the rim.

Smoothness of operational rotation of a vehicle wheel, in particular a motor vehicle wheel, when the vehicle is moving along, is not only influenced by forces which result from geometrical non-uniformities of the wheel component parts, but in particular also by centrifugal forces which result from a wheel unbalance. It is admittedly known for such unbalance effects to be compensated by a mass equalisation procedure, for example by fixing balancing weights to the motor vehicle wheel, but that does not involve taking account of the forces which result from the above-mentioned geometrical non-uniformities at the wheel component parts.

Therefore the object of the invention is to provide a method of the kind set forth in the opening part of this specification, which provides for an improvement in the smoothness with which the motor vehicle wheel runs in operation thereof on the vehicle.

In accordance with the invention that object is attained by the characterising features of claim 1.

The invention provides that on the tyre and the rim geometrical deviation data which are deviations of the tyre and the rim from the geometrical reference or target data are ascertained and an unbalance measuring operation is executed. In those measuring operations in respect of the geometrical deviation data (runouts) and the unbalance measuring operation, the tyre is in a given rotary angle position on the rim. Those measuring operations are preferably carried out at the same time. In that situation, use is made of the fact that the wheel is caused to rotate during the unbalance measuring operation and the geometrical deviation data from the geometrical reference data are ascertained during those rotary movements of the wheel. The operations for measuring the geometrical deviation data and the unbalance can however also be performed in succession in respect of time.

The geometrical deviation data substantially involve radial and/or lateral runouts of the tyre and the rim. Those geometrical deviation data are ascertained with simultaneous measurement with the unbalance measuring operation, in a contactless manner, for example by means of ultrasound, or by means of capacitive sensors, or preferably by optical scanning of the vehicle wheel, for example by means of an apparatus as is known from EP-A-1 174 698. An optical triangulation method is preferred in that respect.

Following those measuring operations in respect of the geometrical deviation data and the unbalance, the tyre is moved on the rim into a second rotary angle position in which a force vector sum resulting from the measured deviation data and the measured wheel unbalance and formed in an electronic computer is minimised.

In simplified form that vector sum can be written as follows:${\text{F=a}}_{\text{1}} {\text{·S}}_{\text{t}} {\text{+a}}_{\text{2}} {\text{S}}_{\text{r}} {\text{+a}}_{\text{3}} {\text{·U}}_{\text{t}} {\text{+a}}_{\text{4}} {\text{·U}}_{\text{r}}$ Therein:
Sₜ denotes a force component resulting from the runout of the tyre,
Sᵣ denotes a force component resulting from the runout of the rim,
Uₜ denotes a force component resulting from the unbalance of the tyre, and
Uᵣ denotes a force component resulting from the unbalance of the rim,

The force components resulting from the runouts of the tyre and the rim depend on the respective weight of the tyre and the rim. The forces resulting from the unbalance of the tyre and the unbalance of the rim can be measured in conventional manner in the form of centrifugal forces on a wheel balancing machine. Preferably the two forces resulting from the unbalance of the tyre and the unbalance of the rim are measured in total as the wheel unbalance. However those forces can also be determined separately by suitable measurement procedures. In that respect, for measuring the tyre unbalance, the tyre can be mounted on a balanced rim which is provided at the balancing machine. When performing the operation for measuring the unbalance of the rim, the rim can be measured without a tyre on the balancing machine.

The individual summands of the above-indicated vector sum include directions, in particular rotary angle positions about the axis of rotation of the vehicle wheel. By altering the rotary angle positions of the individual summands of the above-identified vector sum relative to each other it is possible to achieve minimisation of the vector sum F by means of numerical methods, for example Brent's method, bisection, constrained optimization etc. That provides for calculation of a rotational angle (matching angle) through which the tyre is to be rotated with respect to the rim into the second position.

In the present application the term 'rim' is used to denote the part of the wheel which comprises metal, in particular aluminium, steel or another alloy. That part of the rim includes the peripherally extending rim bed in which the tyre is arranged, and the wheel disc portion which is within the peripherally extending rim bed. That wheel disc portion can be apertured or non-apertured or it can also be formed from spokes.

In the present application the term 'tyre' denotes a pneumatic tyre which is air-tightly mounted in the rim bed of the above-defined rim. In operational use and in regard to the measuring operations to be carried out, the tyre is filled with air at the normal operating pressure.

The individual summands of the above-identified force vector sum F represent force components of the vector sum. The summands of the vector sum can include weighting factors a1, a2, a3 and a4. Those weighting factors can be selected in dependence on the type of wheel. In this respect, depending on the type of wheel, it is possible to establish a weighting of the force components resulting from the unbalances, in relation to the force components resulting from the geometrical deviation data. In addition the proportions of the force components which are determined by the tyre, with respect to the force components which are determined by the rim, can be taken into account in respect of their influence, by virtue of the weighting. If for example the type of wheel involved is one in which the rim has no or only minimum tolerances in respect of the distribution of mass about the axis of the wheel and in respect of the geometrical deviations, the weighting factors associated with the rim will be kept low in relation to the weighting factors in respect of the tyre. In addition, in regard to establishing the magnitude of the weighting factors, the weight of the rim (steel rim or light metal rim) and the weight of the tyre can be taken into account in that magnitude-determining procedure. In addition the weighting factors can be established in dependence on the demands which are made on the running characteristics of the wheel by the vehicle manufacturer or the user of the vehicle. It is also possible to take account of the nature of the suspension with which the wheel is mounted to the vehicle. In general terms the weighting factors which establish the percentage proportions of the weightings of the individual summands in the vector sum are established empirically for respective types of wheel and respective groups of wheel types.

In order to establish whether the residual unbalance of the vehicle wheel is within the prescribed tolerance after the matching operation, that is to say after rotation into the second rotary angle position on the rim, a further unbalance measuring operation is carried out on the vehicle wheel. Then, depending on the ascertained unbalance, unbalance compensation is effected on the vehicle wheel in known manner, for example by means of balancing weights.

The unbalance measuring operations may involve static or dynamic unbalance measuring operations, in which respect unbalance compensation can be effected statically or dynamically depending on the respective type of wheel.

For the improvement of the smoothness with which a motor vehicle runs, the geometrical deviations and the unbalances of a set of the four tyres and rims of the motor vehicle are measured and the four tyres and rims of said set are assembled such that the above explained vector sum for each vehicle wheel is minimized.

## Claims

1. A method of matching a vehicle wheel having a pneumatic tyre mounted on a rim, in which the tyre and the rim are rotated relative to each other in dependence on non-uniformities, **characterised in that** on the tyre and the rim geometrical deviation data which are deviations from geometrical reference data of the tyre and the rim are ascertained and a wheel unbalance measuring operation is carried out, wherein in the operation of measuring the geometrical deviation data and the unbalance measuring operation the tyre is in a first position on the rim and that the tyre is then rotated on the rim into a second position in which a force vector sum resulting from the geometrical deviation data in respect of the tyre and the rim and the wheel unbalance and formed by a computer is minimised.

2. A method according to claim 1 **characterised in that** simultaneously with the measuring operation in respect of the wheel unbalance the geometrical deviations at the tyre and at the rim are measured contactlessly with the wheel rotating.

3. A method according to claim 1 or claim 2 **characterised in that** to ascertain the geometrical deviation data of the tyre and the rim the rotating wheel is scanned optically and in particular by means of an optical triangulation method.

4. A method according to claim 1 **characterised in that** the geometrical deviation data of the tyre and the wheel and the wheel unbalance are measured in succession in respect of time on the rotating wheel.

5. A method according to one of claims 1 to 4 **characterised in that** given weightings are associated with the summands of the vector sum.

6. A method according to one of claims 1 to 5 **characterised in that** the weightings are set in dependence on the type of wheel.

7. A method according to one of claims 1 to 6 **characterised in that** the unbalance of the tyre and the unbalance of the rim are ascertained as separate unbalances in respect of magnitude and angular position.

8. A method according to one of claims 1 to 7 **characterised in that** after rotation of the tyre into the second position on the rim the wheel unbalance is measured again and unbalance compensation is implemented in dependence on that measured unbalance on the vehicle wheel.

9. A method according to one of claims 1 to 8, **characterised in that** the geometrical deviations and the unbalances of a set of four tyres and rims are measured and the four tyres and rims of said set are assembled such that said resulting vector sum for each vehicle wheel is minimized.

## Patentansprüche

1. Verfahren zur Abstimmung eines Fahrzeugrades, das einen auf einer Felge montierten Luftreifen aufweist, wobei der Reifen und die Felge relativ zueinander in Abhängigkeit von Ungleichmäßigkeiten gedreht werden, **dadurch gekennzeichnet, dass** an dem Reifen und der Felge geometrische Abweichungswerte ermittelt werden, die Abweichungen von geometrischen Referenzwerten des Reifens und der Felge darstellen, und dass eine Radunwuchtmessung durchgeführt wird, wobei bei der Durchführung der Messung der geometrischen Abweichungswerte und der Unwuchtmessung sich der Reifen in einer ersten Position auf der Felge befindet und dass der Reifen auf der Felge anschließend in eine zweite Position gedreht wird, in der eine Kraftvektorensumme, die sich aus den geometrischen Abweichungswerten in Bezug auf den Reifen und die Felge sowie der Radunwucht ergibt und mittels eines Rechners gebildet wird, minimiert wird.

2. Verfahren nach Anspruch 1, **dadurch gekennzeichnet, dass** gleichzeitig mit dem Messvorgang bezüglich der Radunwucht die geometrischen Abweichungen an dem Reifen und der Felge berührungslos während der Raddrehung gemessen werden.

3. Verfahren nach Anspruch 1 oder Anspruch 2, **dadurch gekennzeichnet, dass**, um die geometrischen Abweichungswerte des Reifens und der Felge zu ermitteln, das drehende Rad optisch und insbesondere mittels eines optischen Triangulationsverfahrens abgetastet wird.

4. Verfahren nach Anspruch 1, **dadurch gekennzeichnet, dass** die geometrischen Abweichungswerte des Reifens und des Rads sowie die Radunwucht werden in Folge zeitbezogen an dem drehenden Rad gemessen.

5. Verfahren nach einem der Ansprüche 1 bis 4, **dadurch gekennzeichnet, dass** vorgegebene Gewichtungen mit den Summanden der Vektorsumme in Verbindung gebracht werden.

6. Verfahren nach einem der Ansprüche 1 bis 5, **dadurch gekennzeichnet, dass** die Gewichtungen in Abhängigkeit vom Radtyp festgelegt werden.

7. Verfahren nach einem der Ansprüche 1 bis 6, **dadurch gekennzeichnet, dass** die Unwucht des Reifens und die Unwucht der Felge als unabhängige Unwuchten in Bezug auf Größe und Winkelstellung ermittelt werden.

8. Verfahren nach einem der Ansprüche 1 bis 7, **dadurch gekennzeichnet, dass** die Radunwucht nach einer Drehung des Reifens in eine zweite Position auf der Felge wieder gemessen wird und eine Unwuchtkompensation in Abhängigkeit von der gemessenen Unwucht an dem Fahrzeugrad durchgeführt wird.

9. Verfahren nach einem der Ansprüche 1 bis 8, **dadurch gekennzeichnet, dass** die geometrischen Abweichungen und die Unwuchten eines Satzes von vier Reifen und Felgen gemessen werden und die vier Reifen und Felgen dieses Satzes so montiert werden, dass die resultierende Vektorsumme für jedes Fahrzeugrad minimiert wird.

## Revendications

1. Procédé de mise en correspondance d'une roue de véhicule ayant un pneumatique monté sur une jante, dans lequel le pneumatique et la jante sont tournés l'un par rapport à l'autre en fonction de défauts d'uniformité, **caractérisé en ce que** l'on détermine, sur le pneu et la jante, des données d'écarts géométriques qui sont des écarts par rapport à des données de références géométriques du pneu et de la jante et on effectue une opération de mesure de balourd de roue dans lequel, dans l'opération de mesure des données d'écarts géométriques et dans l'opération de mesure de balourd, le pneu est dans une première position sur la jante, et on fait tourner ensuite le pneu pour l'amener sur la jante dans une deuxième position dans laquelle une somme de vecteurs de force résultant des données d'écarts géométriques par rapport au pneu et à la jante et le balourd de roue et formée par un ordinateur est minimisée.

2. Procédé suivant la revendication 1, **caractérisé en ce que**, simultanément à l'opération de mesure par rapport au balourd de roue, on mesure les écarts géométriques du pneu et de la jante sans contact alors que la roue tourne.

3. Procédé suivant la revendication 1 ou 2, **caractérisé en ce que**, pour déterminer les données d'écarts géométriques du pneu et de la jante, la roue mise en rotation est balayée de manière optique et en particulier au moyen d'un procédé optique de triangulation.

4. Procédé suivant la revendication 1, **caractérisé en ce que** l'on mesure les données d'écarts géométriques du pneu et de la roue et le balourd de roue successivement dans le temps sur la roue qui tourne.

5. Procédé suivant l'une des revendications 1 à 4, **caractérisé en ce que** l'on associe des pondérations données aux termes de la somme vecteur.

6. Procédé suivant l'une des revendications 1 à 5, **caractérisé en ce que** l'on règle les pondérations en fonction du type de roue.

7. Procédé suivant l'une des revendications 1 à 6, **caractérisé en ce que** l'on détermine le balourd du pneu et le balourd de la jante en tant que balourds distincts en ce qui concerne l'amplitude et la position angulaire.

8. Procédé suivant l'une des revendications 1 à 7, **caractérisé en ce qu'**après rotation du pneu dans la deuxième position sur la jante, on mesure à nouveau le balourd de roue et on effectue une compensation de balourd en fonction du balourd mesuré sur la roue de véhicule.

9. Procédé suivant l'une des revendications 1 à 8, **caractérisé en ce que** l'on mesure les écarts géométriques et les balourds d'un ensemble de quatre pneus et de quatre jantes, et on assemble les quatre pneus et jantes de l'ensemble de sorte que la somme des vecteurs résultante pour chaque roue de véhicule est rendue minimale.
